# EUROPEAN PATENT SPECIFICATION

(11) **EP 3 139 564 B1**
(45) Date of publication and mention of the grant of the patent: **16.01.2019**
(21) Application number: 15184095.6
(22) Date of filing: 07.09.2015
(51) Int. Cl.: H04L 29/06, H04W 12/02, G06F 21/86, H04M 1/725, H04W 4/00, H04L 29/08

(54) **ENCRYPTION CODING MODULE**
VERSCHLÜSSELUNGSCODIERUNGSMODUL
MODULE DE CODAGE DE CRYPTAGE

(43) Date of publication of application: 08.03.2017
(73) Proprietor: Margento R&D D.o.o., 2000 Maribor (SI)
(72) Inventor: Chowdhury, Amor, 2351 Kamnica (SI); Blazinsek, Iztok, 3203 Nova Cerkev (SI); Igrec, Dalibor, 2000 Maribor (SI)
(74) Representative: Becker Kurig Straus

(56) References cited:
- EP-A1- 2 397 972
- US-A1- 2006 256 968
- US-A1- 2011 222 688

## Description

### TECHNOLOGY FIELD

This invention belongs to the field of encoding (encryption) devices for purposes of secure transfer of speech (phone call), data and messages. The invention is intended to be used with wired or wireless telephone, smart phone, smart gadget, tablet, personal computer or similar devices (hereinafter referred as: »communication device«). The invention is a device which encodes (encrypts) speech (data, messages) between two or more devices connected with the use of voice or data connection.

### TECHNICAL PROBLEM

The technical problem dealt with in the present invention is the design of a device which enables two or more users (devices) a secure conversation or data transfer, without the possibility of speech (data or message) interception (tapping) and decoding (decryption) by the third (unauthorised) party. The conversation or the data transfer is carried out with the use of a communication device.

The development of telecommunications in the past couple of decades made phone call tapping very simple. Various intelligence agencies and private organisations perform routine call interception, which enables them to illegally acquire sensitive political, military, economic and other information. The equipment enabling interception of mobile phone calls and messages became inexpensive and readily available, because of which call tapping became very widespread, simple and uncontrolled. The use of a device proposed with this patent is therefore perfectly justified, as the device ensures privacy protection when a voice or data connection is used.

The protection of speech data with a strong and trustworthy encoding (encryption) is not simple. Most of the encoding (encryption) algorithms used nowadays is of dubious quality as more and more studies show that most of them include various relatively simple ways of accessing encoded (encrypted) packages or the so called »back doors«. Another reason for developing better privacy protection is the fact that modern super-computers abuse the weak protection of weak encoding (encryption) algorithms. Marketing efforts usually hide these disadvantages from the general public by ensuring that the issue is rarely discussed and very little is published about it. Finally the same agencies and institutions which issue certificates of suitability for such encoding (encryption) algorithms are the ones which in many cases are responsible for intercepting and tapping telecommunication devices.

US 2011/0222688 A1 concerns a secure voice solution for a mobile device, in particular for a Blackberry™ type of smartphone, wherein in a secure chip is inserted into the mobile device and used for encrypting and decrypting voice data packets in order to establish secure end-to-end connections.

### SUMMARY OF INVENTION

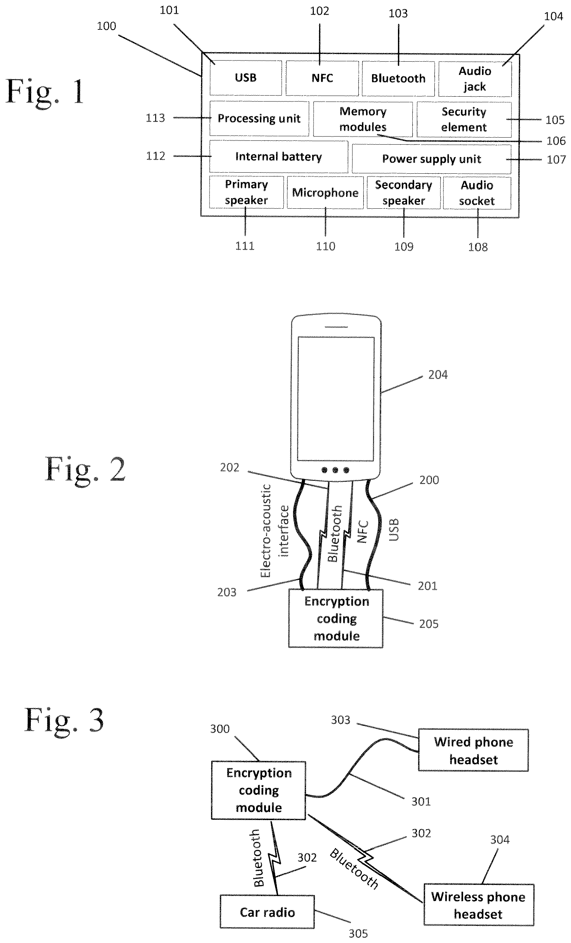

The proposed solution according to claim 1 enables secure conversation, data transfer and messaging between final users or communication devices by using an encryption coding module. The proposed encryption coding module comprises the basic components shown in Figure 1:
- the encryption coding module with autonomous power supply option (internal battery 112), power supply unit 107, which includes a battery management system and has the option of connecting to the external power source, its own processing unit 113, which can among other things be in the form of a micro-controller, FPGA circuit or other processing element. The device is equipped with a various memory modules 106, NFC contactless module 102, Bluetooth or other type of RF module 103, audio jack 104, audio socket 108, microphone for sound capturing 110, primary speaker III for playing sound (speech), USB interface 101, security element 105, which ensures safe storage of key data and also includes a mechanism for detection and prevention of unauthorised access of the encryption coding module and a secondary speaker 109 for jamming the microphone built into the device. The housing of the encryption coding module is constructed in such a way to detect tampering with the interior of the device and immediately disables it for the further use (it is tamper-evident, tamper-responsive and tamper-resistant, tamper-proof). In addition the housing can disable the functioning of the primary microphone of the communication device 100,
- a software application running on the communication device for controlling the encryption coding module.

The design of the encryption coding module is shown in Figure 1. The encryption coding module may be inside the device housing. The housing also serves as barrier to disable the sound capturing on the used communication device.

The internal electronics of the encryption coding module performs the following basic functions:
- sound capturing,
- sound playing,
- encoding (encryption) and decoding (decryption) of sound, data and messages,
- communication with the use of different communication interfaces.

The encryption coding module 205 can establish a connection to the communication device 204 (e.g. mobile phone) in several ways (Figure 2):
- USB interface 200,
- NFC contactless interface 201,
- Bluetooth interface 202 (it is also possible to use other wireless interfaces, such as RF ISM band, ZigBee, WiFi, IR or others),
- electro-acoustic interface (set) 203.

Besides having different options for connecting to the communication device, the encryption coding module can simultaneously establish and maintain communication in digital or analog form through all possible connections available to the communication device (establish and maintain a communication multiplex) which renders data interception more difficult or completely impossible.

The encryption coding module 300 can be connected to external devices (e.g. 303 and 304 and other external devices) through the following communication interfaces (Figure 3):
- Bluetooth interface 302 (e.g. a wireless headphone - 304, car radio - 305, it is also possible to use other wireless interfaces, such as RF ISM band, ZigBee, WiFi, IR or other),
- audio interface - 301 (e.g. wired headphones - 303).

The encryption coding module can function in two modes:
- as a completely autonomous (stand-alone) device, where its presence is not noticeable on the communication device, and the communication device does not influence its operation,
- in combination with an application on the communication device. The procedure for secure communication:
   o the user starts the application on the communication device 601,
   o he/she authenticates himself/herself with a PIN number or a biometric sensor 602; if authentication is not successful, the user must authenticate himself/herself again,
   o if authentication is successful, the user enters the number or the address of the recipient person or chooses one or more users from the contacts 604,
   o the user starts the procedure of establishing a secure connection by pressing a button 605,
   o the application informs the user about the connection between the encryption coding modules being successfully 606 or unsuccessfully 609 established,
   o transfer of sound/speech/data/messages 607,
   o after the conversation/data transfer/message exchange is completed, the user ends the connection 608.

The application on the communication device, which controls the encryption coding module, enables:
- direct control of the encryption coding module (settings, choosing the type of communication interface, etc.),
- establishing of a secure connection,
- secure calling,
- secure communication,
- secure data transfer,
- secure messaging,
- the access to the application on the communication device is restricted (PIN, biometric verification, etc.)
- managing the data of other users of encryption coding modules, with whom a secure connection is established,
- remote update of the firmware and configuration of the encryption coding module.

Encryption coding modules establish a connection between them using communication interfaces of the communication device. Establishing a secure connection is done with the use of two communication interfaces:
- data connection (it is also possible to use other wireless interfaces, such as RF ISM band, ZigBee, WiFi, etc.),
- voice connection (calling).

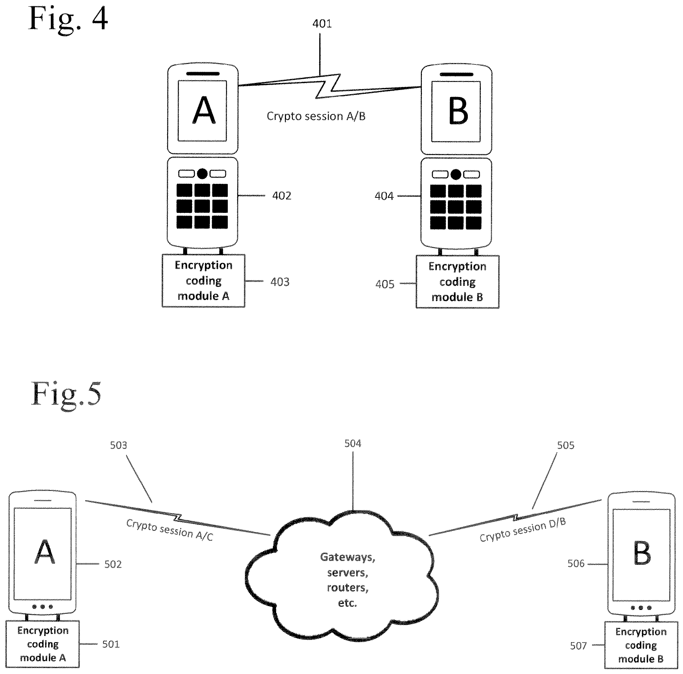

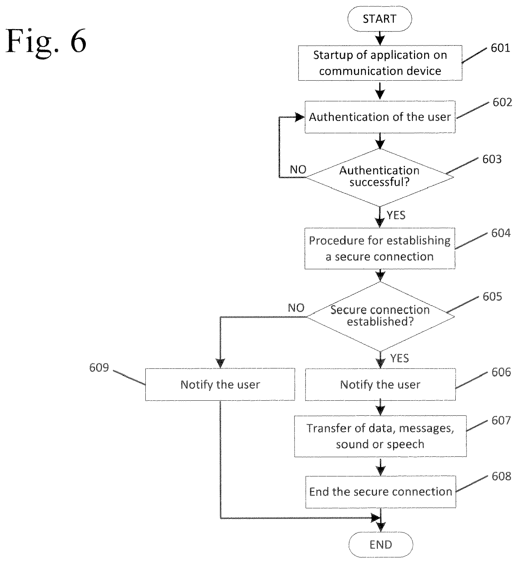

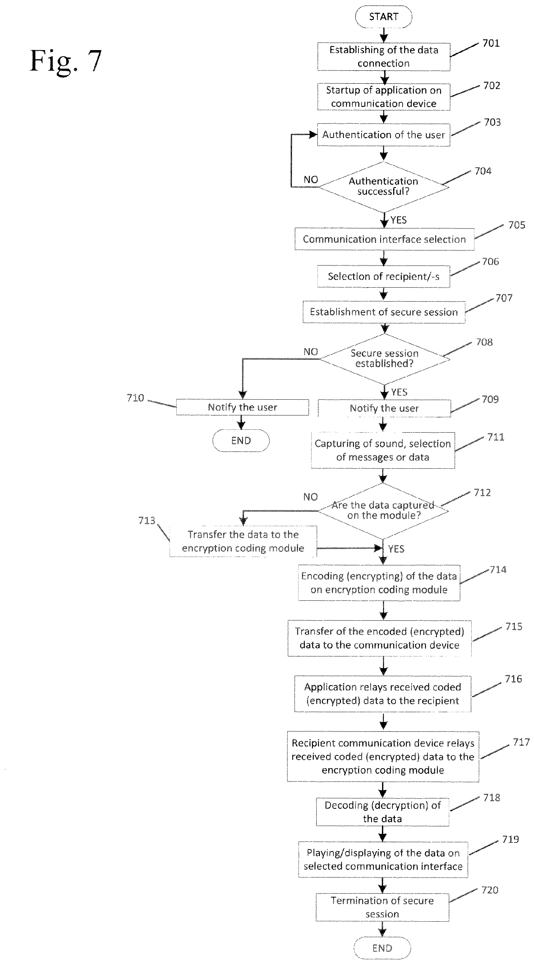

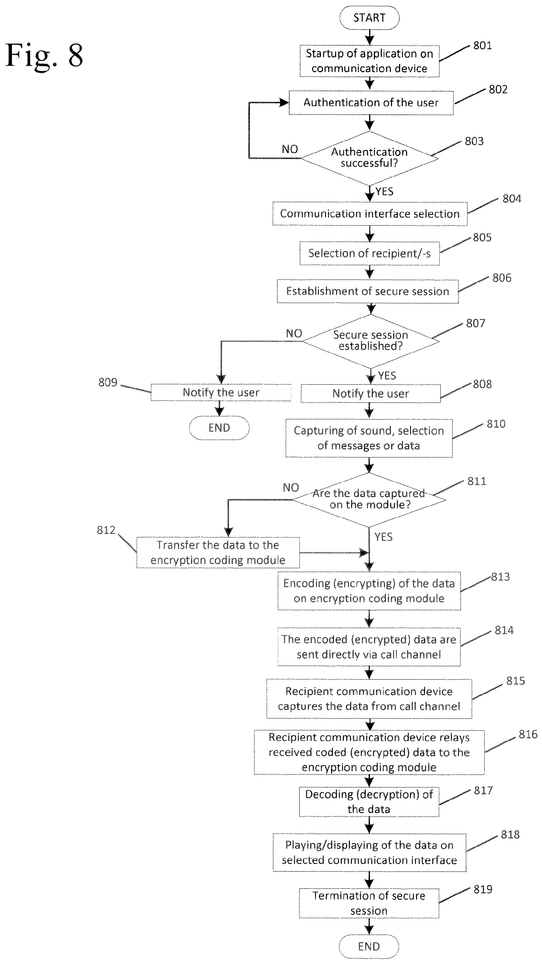

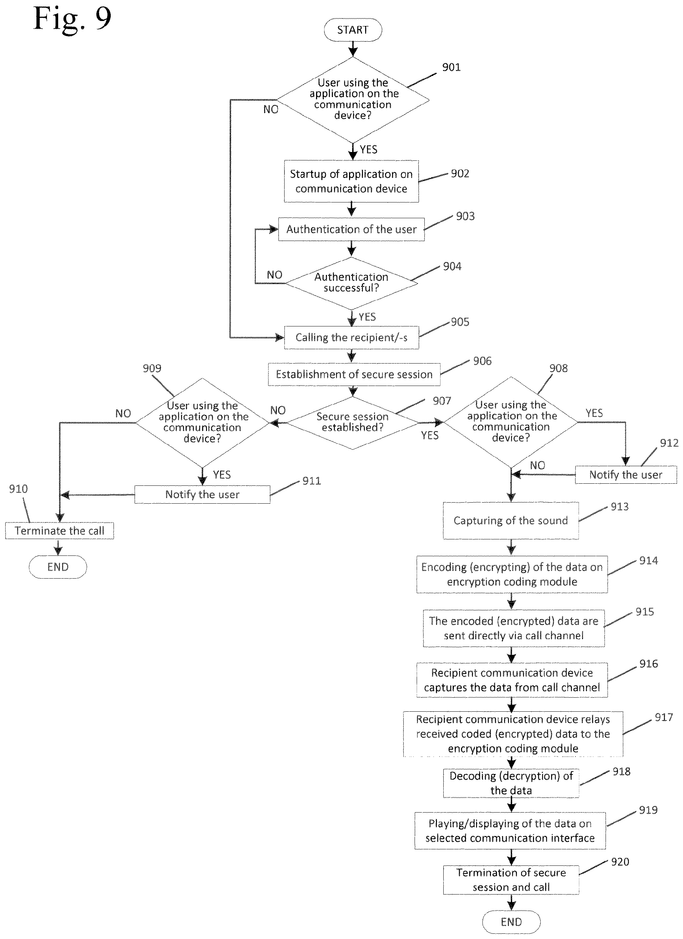

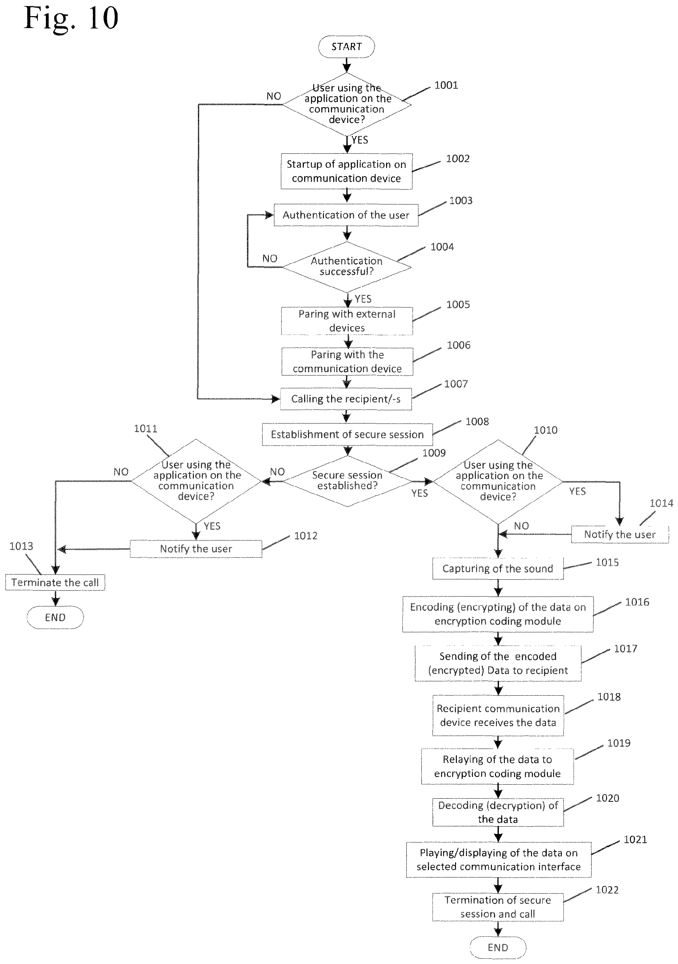

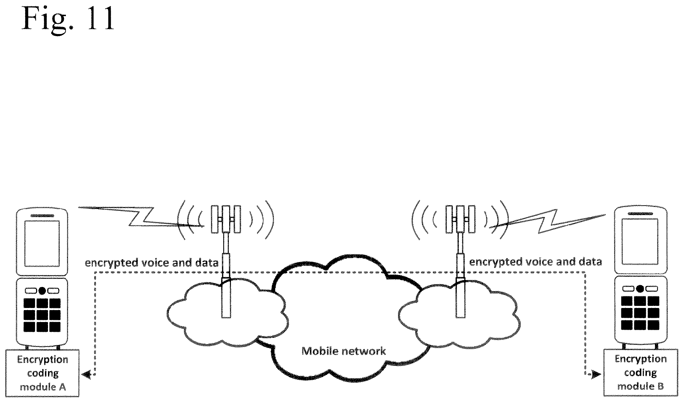

The connection between encryption coding modules can be established in two ways:
- direct connection, where the encryption coding module 403 with the use of a communication interface on the device 402 establishes a secure connection 401 directly to the device 404, which forwards the data to the encryption coding module 405 (Figure 4),
- indirect connection, where the encryption coding module 501 with the use of a communication interface on the device 502 first establishes a secure connection 503 to an interim device 504. This device then starts a new secure session 505 with the final device 506, and the latter forwards the received data to the encryption coding module 507 (Figure 5).

The modes of operation of the encryption coding module which are performed if a secure connection is successfully established between encryption coding modules:
- data transfer: data which are to be transferred are located on the communication device. The communication device first sends the data to the encryption coding module. The encryption coding module encodes (encrypts) them and forwards them to the device which sends them to the recipient communication device. If the indirect connection is utilised, the data are first send to the interim device which relays the data to the final recipient communication device. Recipient communication device then sends the data to its encryption coding module, which decodes (decrypts) them and forwards the result to the communication device;
- messaging: messages which are to be sent are located on the communication device. The communication device relays the messages to the encryption coding module. The encryption coding module encodes (encrypts) them and forwards them to the device which sends them to the recipient communication device. If the indirect connection is utilised, the data are first send to the interim device which relays the data to the final recipient communication device. Recipient communication device then sends the messages to its encryption coding module, which decodes (decrypts) them and forwards the result to the communication device;
- establishing a call (sound transfer) connection: Sound capturing is done through a microphone, which can be located on the encryption coding module, communication device or an external device, connected directly to the encryption coding module with a wired or wireless interface. If the sound is captured with the use of the communication device, the sound is first forwarded to the encryption coding module in the form of captured data, otherwise the data are already on the encryption coding module as they are captured directly with the internal microphone or they are forwarded from the external device. The encryption coding module encodes (encrypts) them and forwards them to the communication device which sends them to the recipient communication device. If the indirect connection is utilised, the data are first send to the interim device which relays the data to the final recipient communication device. The recipient communication device forwards the received data to its encryption coding module, which decodes (decrypts) them and plays them on the chosen communication interface (the speaker of the communication device, the speaker of the encryption coding module, forwarding to other external devices).

### LIST OF ABBREVIATIONS

- NFC - Near Field Communication
- USB - Universal Serial Bus
- Bluetooth - secure wireless high-frequency technology for connecting different digital electronic devices a few meters apart
- ZigBee - wireless communication protocol intended for personal networks with low energy consumption
- RF - radio frequency
- WiFi - wireless network
- FPGA - Field-Programmable Gate Array
- Tamper-Evident - the ability to trace unauthorised access
- Tamper-Responsive - the ability to respond to any unauthorised access
- Tamper-Resistant - the ability to resist any unauthorised access
- Tamper-Proof - the ability to make unauthorised access impossible

## Claims

1. An encryption coding module enabling secure call/speech and data communication for wired or wireless telephones, smart phones, smart devices, tablets, personal computers and similar devices which are integrated or in communication/connection to the encryption coding module, wherein a high level of security is provided is completely independent from the security elements of the communication device, comprising
- internal battery (112),
- power supply unit which can include an external connection for battery charging, wherein the power supply unit includes also the battery control logics (107),
- a processing unit (113), which can be in the form of micro-controller, FPGA circuit or another processing system,
- memory unit (106),
- NFC contactless module (102),
- Bluetooth (103) or another type of wireless communication interface,
- audio jack (104),
- audio socket (108),
- microphone (110),
- primary speaker (111),
- USB connection (101),
- security element (105), adapted to ensure safe storage of key data and including a mechanism for preventing and detecting of unauthorised access to the encryption coding module,
- secondary speaker (109) for jamming a microphone built into the communication device,
- housing adapted for security reasons so that any tampering with the interior of -the device will disable its further use, wherein in addition the housing is adapted to disable the functioning of the microphone of the communication device, wherein a structural design of the housing is provided which disables direct capturing of sound by the communication device by serving as a barrier.

2. The encryption coding module according to claim 1, enabling secure messaging, data transfer and voice/speech calls between two or more devices/users.

3. The encryption coding module according to anyone of the preceding claims, adapted to function in combination with a special application on the communication device used for controlling, configuring, managing and updating the encryption coding module, wherein it is characteristic of the communication between the encryption coding module and the application on the communication device that it is implemented to be secure with the use of coding (encryption).

4. The encryption coding module according to anyone of the preceding claims, including that the communication interface between the communication device (204) and the encryption coding module is implemented with the use of a USB interface (200) and/or wireless communication technology such as Bluetooth (202) and/or electro-acoustic interface (203) using the headphone input/output and/or contactless NFC interface (201) and/or other wireless interfaces, such as RF ISM band, ZigBee, WiFi or IR.

5. The encryption coding module according to anyone of the preceding claims adapted to be operated without the application on the communication device in an independent operation mode (Figure 3).

6. The encryption coding module according to anyone of the preceding claims which is adapted to be used for the capturing and playing audio data (or speech) its own internal speaker and microphone or the speakers) and microphone(s) of the communication device to which it connected, wherein it may also use any other external device which is capable of sound capturing and playing and is connected to the encryption coding module, wherein the external device can be connected directly to the encryption coding module using a wired (301) or wireless (302) connection, and the system can use any combination of the listed sound capturing and playing regimes.

7. The encryption coding module according to anyone of the preceding claims, wherein said module is integrated or connected as an intermediary device between the communication device to which it is connected (300) and the device with the sound/speech or data/messages capturing and/or playing capability, such as headphones (303), wherein the connection is implemented using a wired connection (301).

8. The encryption coding module according to one of the preceding claims, wherein said module is integrated or connected as an interface between the communication device to which it is connected (300), and another external wireless device such as wireless headphones (304), or car radio (305), wherein the connection is implemented using a wireless connection (302).

9. The Encryption coding module according to one of the preceding claims **characterized in that** it uses any combination of integrated and external devices for capturing and/or playing sound or for sending and/or receiving messages/data.

10. The Encryption coding module according to one of the preceding claims **characterized in that** it interconnects communication devices directly (Figure 4) or uses interim devices for connection (e.g. server, gateway) (Figure 5) and thus enables a secure routing and establishment of secure network.

## Patentansprüche

1. Verschlüsselungscodierungsmodul, welches dazu dient, drahtgebundenen oder drahtlosen Telefonen, Smartphones, Smart Devices, Tablets, Personal Computern und ähnlichen Vorrichtungen, die mit dem Verschlüsselungscodierungsmodul integriert oder in Kommunikation/Verbindung damit sind, eine sichere Anruf-/Sprach- und Daten-Kommunikation zu ermöglichen, wobei ein hohes Sicherheitsniveau vollständig unabhängig von den Sicherheitselementen der Kommunikationsvorrichtung bereitgestellt wird, umfassend:
- eine interne Batterie (112),
- eine Stromversorgungseinheit, die eine externe Verbindung zum Batterieladen aufweisen kann, wobei die Stromversorgungseinheit auch die Batteriesteuerlogik (107) umfasst,
- eine Verarbeitungseinheit (113), die in Form eines Mikrocontrollers, einer FPGA-Schaltung oder eines anderen Verarbeitungssystems vorliegen kann,
- eine Speichereinheit (106),
- ein NFC-Kontaktlos-Modul (102),
- Bluetooth (103) oder eine andere Art von drahtloser Kommunikationsschnittstelle,
- einen Audiostecker (104),
- eine Audiobuchse (108),
- ein Mikrofon (110),
- einen primären Lautsprecher (111),
- eine USB-Verbindung (101),
- ein Sicherheitselement (105), das dazu eingerichtet ist, eine sichere Speicherung von Schlüsseldaten zu gewährleisten, und einen Mechanismus zum Verhindern und Erkennen eines nicht autorisierten Zugriffs auf das Verschlüsselungscodierungsmodul umfasst,
- einen sekundären Lautsprecher (109) zum Stören eines in die Kommunikationsvorrichtung eingebauten Mikrofons,
- ein Gehäuse, das aus Sicherheitsgründen derart eingerichtet ist, dass jegliche Manipulation des Inneren der Vorrichtung seine weitere Verwendung verunmöglicht, wobei außerdem das Gehäuse dazu eingerichtet ist, das Funktionieren des Mikrofons der Kommunikationsvorrichtung zu verunmöglichen, wobei eine konstruktive Gestaltung des Gehäuses bereitgestellt ist, die ein direktes Aufnehmen von Ton durch die Kommunikationsvorrichtung verunmöglicht, indem sie als Barriere dient.

2. Verschlüsselungscodierungsmodul nach Anspruch 1, welches sicheren Nachrichtenaustausch, Datentransfer und Stimm-/Sprachanrufe zwischen zwei oder mehr Vorrichtungen/Benutzern ermöglicht.

3. Verschlüsselungscodierungsmodul nach einem der vorhergehenden Ansprüche, dazu eingerichtet, in Kombination mit einer speziellen Applikation auf der Kommunikationsvorrichtung zu funktionieren, die zum Steuern, Konfigurieren, Verwalten und Aktualisieren des Verschlüsselungscodierungsmoduls verwendet wird, wobei es kennzeichnend für die Kommunikation zwischen dem Verschlüsselungscodierungsmodul und der Applikation auf der Kommunikationsvorrichtung ist, dass sie unter Verwendung von Codierung (Verschlüsselung) dazu implementiert ist, sicher zu sein.

4. Verschlüsselungscodierungsmodul nach einem der vorherigen Ansprüche, wobei die Kommunikationsschnittstelle zwischen der Kommunikationseinrichtung (204) und dem Verschlüsselungscodierungsmodul implementiert ist unter Verwendung einer USB-Schnittstelle (200) und/oder einer drahtlosen Kommunikationstechnologie wie etwa Bluetooth (202) und/oder einer elektroakustischen Schnittstelle (203), welche den Kopfhörereingang/-ausgang benutzt, und/oder einer kontaktlosen NFC-Schnittstelle (201) und/oder anderer drahtloser Schnittstellen, wie etwa HF-ISM-Band, ZigBee, WiFi oder IR.

5. Verschlüsselungscodierungsmodul nach einem der vorhergehenden Ansprüche, welches dazu eingerichtet ist, ohne die Applikation auf der Kommunikationsvorrichtung in einem unabhängigen Betriebsmodus betrieben zu werden (Figur 3).

6. Verschlüsselungscodierungsmodul nach einem der vorherigen Ansprüche, welches dazu eingerichtet ist, für das Aufnehmen und Wiedergeben von Audiodaten (oder Sprache) seinen eigenen internen Lautsprecher und sein eigenes internes Mikrofon oder den/die Lautsprecher und das/die Mikrofon(e) der Kommunikationsvorrichtung, mit der es verbunden ist, zu benutzen, wobei es auch eine beliebige andere externe Vorrichtung benutzen kann, welche zum Tonaufnehmen und -wiedergeben in der Lage ist und mit dem Verschlüsselungscodierungsmodul verbunden ist, wobei die externe Vorrichtung unter Verwendung einer drahtgebundenen (301) oder drahtlosen (302) Verbindung direkt mit dem Verschlüsselungscodierungsmodul verbunden sein kann, und das System eine beliebige Kombination der aufgeführten Tonaufnahme- und -wiedergaberegimes benutzen kann.

7. Verschlüsselungscodierungsmodul nach einem der vorhergehenden Ansprüche, wobei das Modul integriert oder als intermediäre Vorrichtung zwischen der Kommunikationsvorrichtung, mit der es verbunden ist, (300) und der Vorrichtung mit der Fähigkeit zum Aufnehmen von Ton/Sprache oder Daten/Nachrichten und/oder der Wiedergabefähigkeit, wie etwa Kopfhörern (303), verbunden ist, wobei die Verbindung unter Verwendung einer drahtgebundenen Verbindung (301) implementiert ist.

8. Verschlüsselungscodierungsmodul nach einem der vorhergehenden Ansprüche, wobei das Modul integriert oder als Schnittstelle zwischen der Kommunikationsvorrichtung, mit der es verbunden ist (300), und einer weiteren externen drahtlosen Vorrichtung, wie etwa drahtlosen Kopfhörern (304), oder einem Autoradio (305), verbunden ist, wobei die Verbindung unter Verwendung einer drahtlosen Verbindung (302) implementiert ist.

9. Verschlüsselungscodierungsmodul nach einem der vorherigen Ansprüche, **dadurch gekennzeichnet, dass** es eine beliebige Kombination aus integrierten und externen Vorrichtungen zum Aufnehmen und/oder Wiedergeben von Ton oder zum Senden und/oder Empfangen von Nachrichten/Daten benutzt.

10. Verschlüsselungscodierungsmodul nach einem der vorherigen Ansprüche, **dadurch gekennzeichnet, dass** es Kommunikationsvorrichtungen direkt miteinander verbindet (Figur 4) oder Interim-Vorrichtungen zur Verbindung nutzt (z. B. einen Server, ein Gateway) (Figur 5) und dadurch ein sicheres Routing und ein Herstellen eines sicheren Netzwerks ermöglicht.

## Revendications

1. Module de codage par cryptage permettant une communication de données et vocale/d'appel sécurisée pour des téléphones filaires ou sans fil, des téléphones intelligents, des dispositifs intelligents, des tablettes, des ordinateurs personnels et des dispositifs similaires qui sont intégrés ou en communication/connexion avec le module de codage par cryptage, dans lequel un haut niveau de sécurité est fourni complètement indépendamment des éléments de sécurité du dispositif de communication, comprenant
- une batterie interne (112),
- une unité d'alimentation électrique qui peut inclure une connexion externe pour une charge de batterie, dans lequel l'unité d'alimentation électrique inclut aussi les logiques de commande de batterie (107),
- une unité de traitement (113), qui peut prendre la forme d'un circuit de microcontrôleur, FPGA, ou d'un autre système de traitement,
- une unité de mémoire (106),
- un module sans contact NFC (102),
- une interface de communication Bluetooth (103) ou d'un autre type de communication sans fil,
- une prise jack audio (104),
- une prise standard audio (108),
- un microphone (110),
- un haut-parleur primaire (111),
- une connexion USB (101),
- un élément de sécurité (105), adapté pour garantir une mémorisation sécurisée des données de clé et incluant un mécanisme pour empêcher et détecter un accès non autorisé au module de codage par cryptage,
- un haut-parleur secondaire (109) pour le brouillage d'un microphone intégré dans le dispositif de communication,
- un boîtier adapté pour des raisons de sécurité de sorte que n'importe quel essai pour forcer l'intérieur du dispositif désactivera son utilisation ultérieure, dans laquelle en outre le boîtier est adapté pour désactiver le fonctionnement du microphone du dispositif de communication, dans lequel une conception structurelle du boîtier est prévue, qui désactive une capture de son directe par le dispositif de communication en servant de barrière.

2. Module de codage par cryptage selon la revendication 1, permettant une messagerie sécurisée, un transfert de données et des appels vocaux/ conversations entre deux ou plus dispositifs/utilisateurs.

3. Module de codage par cryptage selon une quelconque des revendications précédentes, adapté pour fonctionner en combinaison avec une application spéciale sur le dispositif de communication utilisée pour commander, configurer, gérer et mettre à jour le module de codage de cryptage, dans lequel il est caractéristique de la communication entre le module de codage par cryptage et l'application sur le dispositif de communication qu'il est implémenté afin d'être sécurisé par l'utilisation du codage (cryptage).

4. Module de codage par cryptage selon une quelconque des revendications précédentes, incluant que l'interface de communication entre le dispositif de communication (204) et le module de codage par cryptage est implémenté avec l'utilisation d'une interface USB (200) et/ou une technologie de communication sans fil telle que le Bluetooth (202) et/ou une interface électroacoustique (203) utilisant l'entrée/sortie d'écouteur et/ou une interface NFC sans contact (201) et/ou des interfaces sans fil, telles qu'une bande ISM Rf, ZigBee, Wifi ou IR.

5. Module de codage par cryptage selon une quelconque des revendications précédentes adapté pour fonctionner sans l'application sur le dispositif de communication dans un mode de fonctionnement indépendant (Figure 3).

6. Module de codage par cryptage selon une quelconque des revendications précédentes, qui est adapté pour être utilisé pour la capture et la lecture de données audio (ou vocales) auquel son propre haut-parleur interne et microphone et le (les) haut-parleur(s) et le (les) microphone(s) du dispositif de communication sont connectés, dans lequel il peut aussi utiliser n'importe quel autre périphérique qui est capable de capture et lecture de son et est connecté au module de codage par cryptage, dans lequel le périphérique peut être connecté directement au module de codage par cryptage en utilisant une connexion filaire (301) ou sans fil (302), et le système peut utiliser n'importe quelle combinaison des régimes de capture de son et de lecture de son listés.

7. Module de codage par cryptage selon une quelconque des revendications précédentes, dans lequel ledit module est intégré ou connecté comme un dispositif intermédiaire entre le dispositif de communication auquel il est connecté (300) et le dispositif avec la capacité de capture et/ou lecture sonore/vocale ou de données/messages, tel que des écouteurs (303), dans lequel la connexion est implémentée en utilisant une connexion filaire (301).

8. Module de codage par cryptage selon une quelconque des revendications précédentes, dans lequel ledit module est intégré ou connecté comme une interface entre le dispositif de communication auquel il est connecté (300), et un autre dispositif périphérique tel que des écouteurs sans fil (304), ou un autoradio (305), dans lequel la collection est implémentée en utilisant une connexion sans fil (302).

9. Module de codage par cryptage selon une quelconque des revendications précédentes, **caractérisé en ce qu'**il utilise n'importe quelle combinaison de dispositifs intégrés et externes pour capturer et/ou lire des sons ou pour envoyer et/ou recevoir des données/message.

10. Module de codage par cryptage selon une quelconque des revendications précédentes, **caractérisé en ce qu'**il interconnecte directement des dispositifs de communication (Figure 4) ou utilise des dispositifs intermédiaires pour la connexion (par ex. serveur, passerelle) (Figure 5) et permet ainsi un routage sécurisé et l'établissement d'un réseau sécurisé.
